# EUROPÄISCHE PATENTSCHRIFT

(11) **EP 1 089 805 B1**
(45) Veröffentlichungstag und Bekanntmachung des Hinweises auf die Patenterteilung: **27.11.2002**
(21) Anmeldenummer: 99931038.6
(22) Anmeldetag: 05.06.1999
(51) Int. Cl.: B01D 63/08, B01D 65/02

(54) **CROSSFLOW-FILTERKASSETTEN**
CROSS-FLOW FILTER CARTRIDGE
CARTOUCHES-FILTRES A CONTRE-COURANT

(30) Priorität: 19.06.1998 DE 19827473
(43) Veröffentlichungstag der Anmeldung: 11.04.2001
(73) Patentinhaber: SARTORIUS AG, 37075 Göttingen (DE)
(72) Erfinder: GRUMMERT, Ulrich, D-37081 Göttingen (DE); SCHMIDT, Hans-Weddo, D-37181 Hardegsen (DE)
(86) Internationale Anmeldenummer: EP9903897
(87) Internationale Veröffentlichungsnummer: WO99067012

(56) Entgegenhaltungen:
- DE-A- 3 341 262
- DE-A- 4 432 627
- US-A- 4 715 955

## Beschreibung

Die Erfindung betrifft verbesserte Crossflow-Filterkassetten, welche zwischen Einspannplatten angeordnet in Crossflow-Filtrationsanlagen betrieben werden.

Mit den erfindungsgemäßen, verbesserten Crossflow-Filterkassetten können Fluide wie Flüssigkeiten, Emulsionen, Suspensionen, Lebensmittel und Getränke, wie Bier, Bierwürze, Wein, Saft, Wasser, Mineralwasser und Milch, Trink-, Brauch- und Abwasser, Lösungen im Pharma-, Medizin-, Kosmetik-, Chemie-, Biotechnologie-, Gentechnik-, Elektronik-, Umweltschutz- und Laborbereich filtriert werden. Sie können zur Stofftrennung, zur Entpyrogenisierung und Sterilisierung von Lösungen und zur Abtrennung von Schadstoffen aus Fluiden, für die Filtration und Aufkonzentrierung biologischer Lösungen, für die Abtrennung von Mikroorganismen, wie Bakterien, Hefen, Viren und von Zellbestandteilen, für die Entsalzung von Proteinlösungen und anderen biologischen Medien, für die Stofftrennung von Ionen, Makromolekülen und Biomolekülen verwendet werden.

Die Crossflow-Filtration wird mit Kassetten-Filtrationsanlagen durchgeführt, in denen mindestens eine Filterkassette, in der Regel aber mehrere Filterkassetten hintereinander als Stapel angeordnet sind. Die Filterkassetten sind dabei zwischen Einspannplatten in ihren peripheren Randbereichen fluiddicht eingepreßt. Dabei sind die Einspannplatten als An- und/oder Abströmplatten mit entsprechenden Verteilern und Anschlüssen an die Kanäle für Fluidzulauf, Retentatablauf und Filtratablauf ausgebildet (WO 96/28240, EP-PS 0 345 209). Wenn es sich bei den Dichtungsmassen des peripheren Randbereichs um harte Dichtungsmassen, beispielsweise um solche aus Polypropylen, handelt, werden die Filterkassetten unter Verwendung elastischer Flachdichtungen untereinander oder gegenüber den Einspannplatten fluiddicht eingespannt. Bei dauerelastischen Dichtungsmassen, beispielsweise aus Silikon, wird die fluiddichte Einspannung ohne zusätzliche Dichtungen erreicht. Bei der Crossflow-Filtration wird das zu filtrierende Fluid über die Anströmplatte und entsprechende Kanäle in Überströmspalte der Filterkassetten für zu filtrierendes Fluid gedrückt. Es überströmt die Membranfläche und wird als Retentat abgeführt. Ein Teil permeiert durch die Membran hindurch und wird gesammelt und über entsprechende Kanäle und die Abströmplatte als Filtrat aus der Anlage abgeführt Über Pumpen und Ventile werden die Fluidflüsse und -drücke geregelt. Für einen optimalen Betrieb derartiger Crossflow-Filtrationsanlagen müssen die Pumpenleistungen zur Realisierung der Überströmung des zu filtrierenden Fluids/Retentats auf die Konfiguration der Filterkassetten, insbesondere auf die Höhe der Überströmspalte für zu filtrierendes Fluid abgestimmt sein. Andernfalls werden die für eine effektive Filtration erforderlichen Überströmungsgeschwindigkeiten und Transmembrandrücke nicht erreicht, bzw überschritten

Crossflow-Filterkassetten sind bekannt und werden beispielsweise in der US-PS 47 15 955 und der DE-PS 34 41 249 beschrieben. Die Filterkassetten sind aus einer Vielzahl benachbarter Filterzellen aufgebaut, die aus alternierend angeordneten, flächigen Zuschnitten von mindestens einem Retentatabstandshalter zur Ausbildung eines Überströmspalts für zu filtrierendes Fluid, einer ersten Membran, einem Filtratabstandshalter zur Ausbildung eines Filtratsammelspalts und einer zweiten Membran bestehen. Die Zuschnitte verfügen in der Regel in ihren Randbereichen über Zugänge zu den Durchbrechungen zur Ausbildung von vorzugsweise senkrecht zur Fläche der Zuschnitte verlaufenden Kanälen für Fluidzulauf, Retentatablauf und Filtratablauf. Dabei sind jene Durchbrechungen der Abstandshalter, die zu den Kanälen hin geschlossen zu halten sind, in ihren peripheren Randbereichen von einer über die Ebene der Abstandshalter geringfügig überstehenden Dichtungsmasse fluiddicht eingefaßt. Die übrigen Durchbrechungen der Abstandshalter, die mit den Kanälen in kommunizierender Verbindung stehen, sind von keiner Dichtungsmasse eingefaßt, sondern offen. Zum Schutz der Membranen vor mechanischen Beschädigungen, die insbesondere im Übergangsbereich der Dichtungsmassen eintreten und durch zu starkes An- oder Eindrücken der Membranen an oder in die Abstandshalter verursacht werden, verwendet man textilverstärkte Membranen, bei denen eine oder beide Membranflächen von der textilen Verstärkung, beispielsweise von einem Faservlies, bedeckt sind. Nachteilig ist, daß derartige textilverstärkte Membranen gegenüber unverstärkten Membranen einen reduzierten Durchfluß für das Filtrat und damit eine geringere Filtrationsleistung aufweisen. Alternativ schlägt die DE-PS 34 41 249 einen zusätzlichen Einbau von Schutzringmasken und Schutzrahmen zwischen den Zuschnitten vor. Neben dem dadurch erreichten Schutz der unverstärkten Membranen vor mechanischer Beschädigung werden gleichzeitig die Überströmspalte für zu filtrierendes Fluid in ihrer Höhe vergrößert (sogenannte Weitspaltmodule). Über die Dicke der Schutzringmasken und Schutzrahmen kann die Höhe der Überströmspalte in gewissen Grenzen eingestellt werden. Das ist zwar mit einer Reihe von Vorteilen verbunden, wie gute Partikelgängigkeit, Einsatz einer breiten Palette von Abstandshaltern unterschiedlicher Stärken, insbesonderer grober Gewebe, geringe mechanische Beanspruchung der Membranen und Möglichkeit der Filtration viskoser Medien, weist aber auch den Nachteil auf, daß durch die erweiterten Überströmspalte die für eine optimale Filtration erforderlichen Überströmungsgeschwindigkeiten des zu filtrierenden Fluids über die Membranflächen hinweg nur durch hohe Pumpenleistungen zu erreichen sind. Anlagen, die mit derartigen Filterkassetten ausgerüstet sind, erfordern einen hohen Energieaufwand. Sie sind außerdem nicht mit optimaler Leistung in Anlagen betreibbar, die mit geringer Pumpenleistungen ausgelegt sind.
Die Verwendung von Filterkassetten mit von vornherein geringer Spalthöhe, das heißt von Filterkassetten, die keine durch zum Beispiel Schutzringmasken und Schutzrahmen erweiterten Überströmspalte aufweisen (sogenannte Engspaltmodule), haben zwar den Vorteil, daß bereits hohe Überströmungsgeschwindigkeiten bei niedrigeren Pumpenleistungen erreicht werden, sie ist aber mit den Nachteilen einer Beschränkung auf den Einsatz dünner Abstandshalter bei hoher mechanischer Beanspruchung der Membranen und verminderter freier Membranfläche, die für die Filtration zur Verfügung steht, verbunden. Durch die Verwendung feiner Gewebe als Abstandshalter ist nämlich die Anzahl der nicht filtrierenden Auflagepunkte der Membran auf den Gewebefäden erhöht im Vergleich zu dicken, groben Geweben oder zu Filterkassetten mit eingebauten Schutzringmasken und Schutzrahmen. Außerdem weisen derartige Filterkassetten eine geringe Partikelgängigkeit und schlechte Filtrierbarkeit für viskose Medien auf.

Der Erfindung liegt daher die Aufgabe zu Grunde, verbesserte Crossflow-Filterkassetten bereit zu stellen, die in Crossflow-Filtrationsanlagen mit unterschiedlichen Pumpenleistungen betrieben werden können. Eine weitere Aufgabe der Erfindung besteht darin, verbesserte Crossflow-Filterkassetten bereit zu stellen, die trotz der Ausstattung mit unverstärkten Membranen als Engspaltmodule betreibbar sind.

Die Aufgabe wird durch die im Kennzeichen der unabhängigen Ansprüche angegebenen Merkmale gelöst. Vorteilhafte Weiterbildungen der Erfindung sind durch die Merkmale der Unteransprüche definiert.

Die erfindungsgemäßen Crossflow-Filterkassetten zeichnen sich dadurch aus, daß sie über mindestens einen Retentatabstandshalter verfügen, bei dem die Zugänge zu den offenen Durchbrechungen zur Ausbildung der einen Art von Kanälen größer sind, als die Zugänge zu den offenen Durchbrechungen zur Ausbildung der anderen Art von Kanälen. Wenn die Crossflow-Filterkassetten so an die An- und/oder Abströmplatten angeschlossen werden, daß die größeren Zugänge zu den offenen Durchbrechungen des mindestens einen Retentatabstandshalters die Kanäle für den Fluidzulauf bilden, entsteht in diesem Überströmspalt ein Druckgefälle auf einem höhren Druckniveau als in den übrigen Überströmspalten, die über gleich große Zugänge zu den offenen Durchbrechungen zu den Kanälen für den Fluidzulauf und Retentatablauf verfügen. Von diesem höheren Druckniveau wird offensichtlich eine Kraft auf die flächigen Zuschnitte ausgeübt (dieser Überströmspalt weitet sich), was dazu führt, daß die übrigen Überströmspalte verengt werden, wodurch die Überströmungsgeschwindigkeit ansteigt oder bei gleicher Überströmungsgeschwindigkeit eine geringere Menge an zu überströmendem Fluid pro Zeiteinheit durch die Filterkassette hindurchgepumpt zu werden braucht.

In einer alternativen Ausführungsform der Erfindungen, sind die Membranen in ihren Randbereichen von die Durchbrechungen offen lassenden Schutzrahmen oder im Bereich ihrer Durchbrechungen von die Durchbrechungen offen lassenden Schutzringmasken bedeckt. Das gestattet den Einbau von mechanisch empfindlichen unverstärkten Membranen in die Filterkassetten, führt aber gleichzeitig zu einer Vergrößerung der Überströmspalte und damit zu höheren Pumpenleistungen, um eine optimale Überströmung der Membranen zu realisieren. Dieser negative Effekt wird durch die vorstehend beschriebenen erfinungsgemäßen Maßnahmen beseitigt, weil, wie vorstehend beschrieben, Überströmspalte vererengt werden.
In vorteilhaften Ausgestaltungen der Erfindung sind die Retentabstandshalter mit den unterschiedlich großen Zugängen zu den offenen Durchbrechungen als äußere, und/oder innere Retentatabstandshalter oder in periodischer Abfolge in den Filterkassetten angeordnet.
Überraschenderweise wurde gefunden, daß die erfindungsgemäßen Crossflow-Filterkassetten mit hoher Filtrationsleistung sowohl in Crossflow-Filtrationsanlagen, die über eine hohe Pumpenleistung verfügen, als auch in Crossflow-Filtrationsanlagen mit geringerer Pumpenleistung betrieben werden können, wenn die Crossflow-Filterkassetten so an die An- und/oder Abströmplatten angeschlossen werden, daß im ersten Fall die größeren Zugänge zu den offenen Durchbrechungen des mindestens einen Retentatabstandshalters die Kanäle für den Retentatablauf (abströmseitig) und im zweiten Fall für den Fluidzulauf(anströmseitig) bilden.
Die erfindungsgemäßen Crossflow-Filterkassetten weisen in den beiden möglichen Strömungsrichtungen asymmetrische Strömungseigenschaften auf Dies kann anlagentechnisch dazu ausgenutzt werden, mit Hilfe einer Strömungumkehr, beispielsweise während einer Reinigung, wieder optimale Druckverhältnisse zu erreichen. Eine weitere Möglichkeit zur Ausnutzung dieser asymmetrischen Strömungseigenschaften besteht im Anfahren einer Crossflow-Filtrationsanlage mit niedrigem Druck, der im Verlaufe der Filtration langsam gesteigert wird.

Die Erfindung soll anhand der Figuren und de Ausführungsbeispiel näher erläutert werden.
Dabei zeigen
- Fig. 1: einen erfindungsgemäßen Retentatabstandshalter,
- Fig. 2: einen Retentatabstandshalter nach dem Stand der Technik,
- Fig. 3: schematisch einen Schnitt durch eine erfindungsgemäße Crossflow-Filterkassette,
- Fig. 4: schematisch einen Schnitt durch eine Crossflow-Filterkassette nach dem Stand der Technik und
- Fig. 5: ein Diagramm des Verlaufs des Retentatstroms in Abhängigkeit von der retentatseitigen Druckdifferenz (Eingangsdruck - Ausgangsdruck) bei konstantem Permeatstrom.

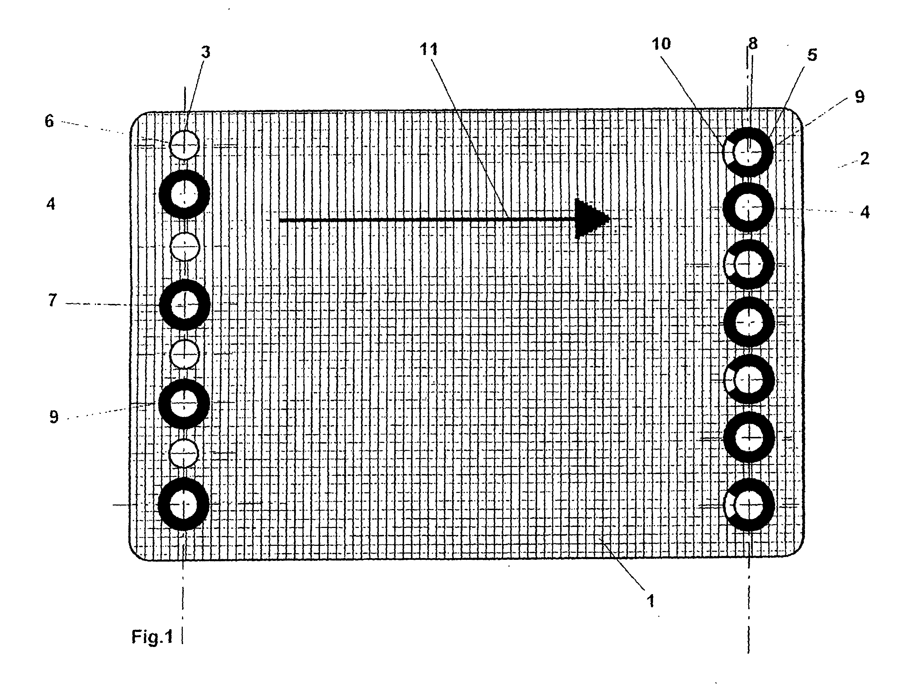

Gemäß Figur 1 weist der aus einem Gewebe **1** bestehende Retentatabstandshalter **2** Durchbrechungen **3, 4, 5** auf, von denen die offenen Durchbrechungen **3** von den Kanälen für den Fluidzulauf **6** , die geschlossenen Durchbrechungen **4** von den Kanälen für Filtratablauf **7** und die offenen Durchbrechungen **5** von den Kanälen für Retentatablauf **8** durchdrungen sind. Dabei stehen die offenen Durchbrechungen **3, 5** mit dem durch den Retentatabstandshalter **2** gebildeten Überströmspalt **15** in kommuniziernder Verbindung. Die offenen Durchbrechungen **3** verfügen über größere Zugänge zu den Kanälen für die Fluidzufuhr **6** als die offenen Durchbrechungen **5** zu den Kanälen für den Retentatablauf **8**. Die geschlossenen Durchbrechungen **4** sind von einer dauerelastischen Dichtungsmasse **9** fluiddicht eingefaßt. Gemäß Figur 1 werden die kleineren Zugänge **10** zu den offenen Durchbrechungen **5** zur Ausbildung der Kanäle für den Retentatablauf **8** beispielsweise ebenfalls durch eine dauerelastische Dichtungsmasse **9** realisiert, die den peripheren Randbereich der offenen Durchbrechungen **5** teilweise umfaßt. Zur Abdichtung gegenüber den benachbarten flächigen Zuschnitten beziehungsweise den benachbarten Schutzrahmen oder Schutzringmasken (nicht dargestellt) steht die Dichtungsmasse **9** geringfügig über die Ebene des Abstandshalters **2** über. Das zu filtrierende Fluid dringt über die Kanäle für die Fluidzufuhr **6** über den größeren Zugang zu den offenen Durchbrechungen **3** in den Überströmspalt **15**, der von zu dem Retentatabstandshalter **2** benachbarten Zuschnitten (Membranen) gebildet wird ein, überströmt beidseitig das Gewebe **1** und verläßt über die die den Durchbrechungen **3** gegenüberliegenden Zugänge **10** der offenen Durchbrechungen **5** den Überströmspalt und wird mittels der Kanäle für den Retentatablauf 8 abgeführt. Die Strömungsrichtung wird durch den Pfeil **11** angegeben. Ein Teil des Fluids durchdringt die dem Retentatabstandshalter **2** benachbarten Membranen **13,** wird im Filtratsammelspalt gesammelt und mittels offener Durchbrechungen zur Ausbildung der Kanäle für die Filtratabfuhr **7** in einem Filtratabstandshalter **14** abgeführt.

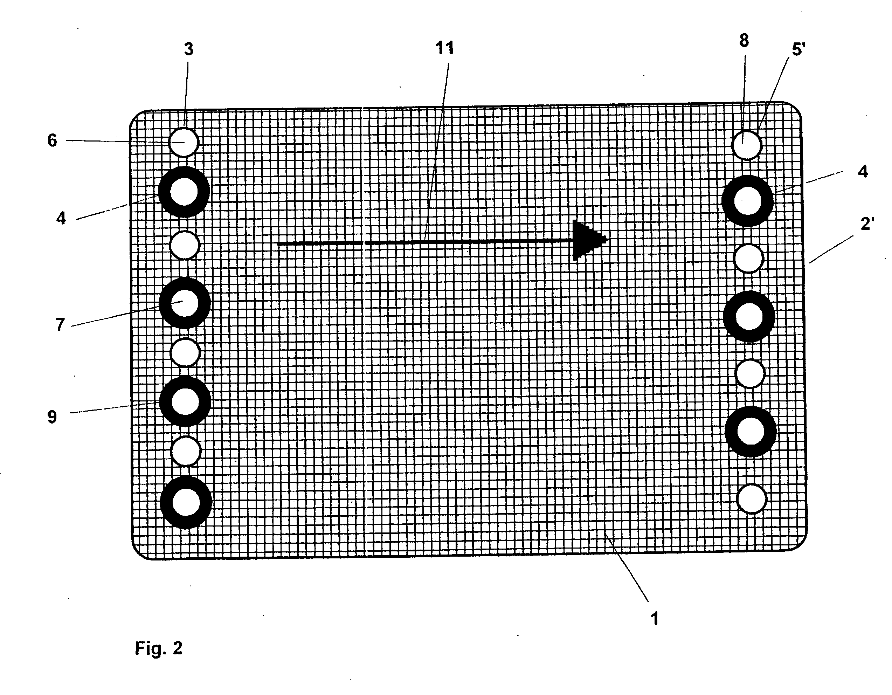

Gemäß Figur 2 weist der aus einem Gewebe **1** bestehende Retentatabstandshalter **2'** des Standes der Technik ebenfalls Durchbrechungen **3, 4, 5'** auf, von denen die offenen Durchbrechungen **3** von den Kanälen für die Fluidzufuhr **6** , die geschlossenen Durchbrechungen **4** von den Kanälen für Filtratablauf **7** und die offenen Durchbrechungen **5'** von den Kanälen für Retentatablauf **8** durchdrungen sind. Dabei stehen die offenen Durchbrechungen **3, 5'** mit dem durch den Retentatabstandshalter **2** gebildeten Überströmspalt **16** in kommuniziernder Verbindung. Die offenen Durchbrechungen **3, 5'** verfügen über gleich große Zugänge zu den Kanälen für die Fluidzufuhr **6** und für den Retentatablauf **8**.

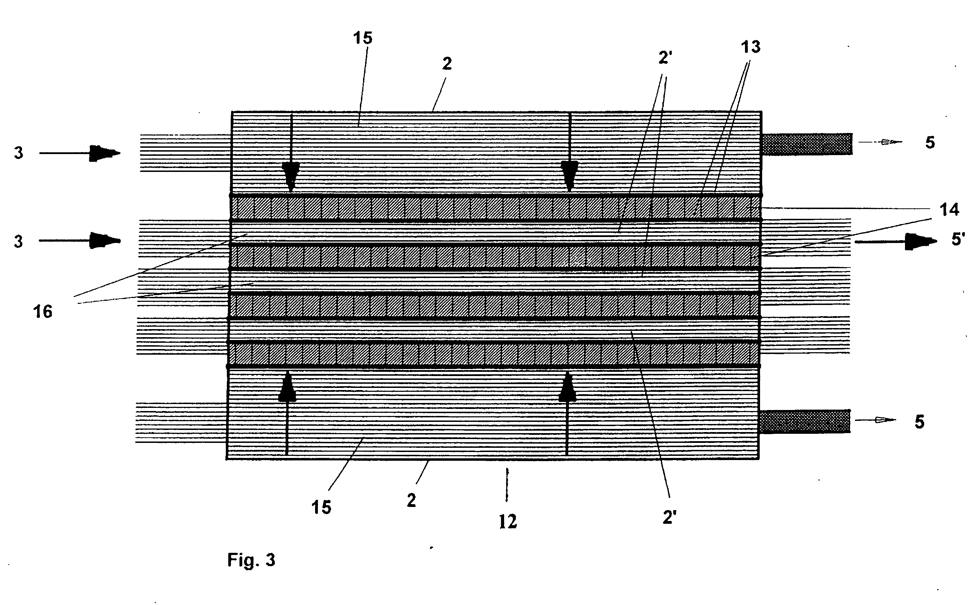

Der schematische Schnitt durch eine erfindungsgemäße Crossflow-Filterkassette gemäß Figur 3 zeigt den Aufbau einer bevorzugten Ausführungsform der Erfindung. Die Crossflow-Filterkassette **12** besteht aus oberen und unteren äußeren Retentatabstandshalter **2** und mehreren inneren Retentatabstandshaltern **2',** Membranen **13** und Filtratabstandshaltern **14**. Bei den äußeren Retentatabstandshaltern **2** sind die Zugänge zu den offenen Durchbrechungen **3** zur Ausbildung der Kanäle für den Fluidzulaauf **6** größer als die Zugänge **10** zu den offenen Durchbrechungen **5** zur Ausbildung der Kanäle für den Retentatablauf **8**. Die inneren Retentatabstandshalter **2'** sind Retentatabstandshalter des Standes der Technik mit gleich großen Zugängen zu den Durchbrechungen **3** und **5'**. Wenn die Crossflow-Filterkassette **12** so an die Anund/oder Abströmplatten angeschlossen werden, daß die größeren Zugänge zu den offenen Durchbrechungen **3** der äußeren Retentatabstandshalter **2** die Kanäle für den Fluidzulauf **6** bilden, entsteht in den Überströmspalten **15** ein Druckgefälle auf einem höheren Druckniveau als in den übrigen Überströmspalten **16,** die über gleich große Zugänge zu den offenen Durchbrechungen zu den Kanälen für die Fluidzulauf **6** und Retentatablauf **8** verfügen. Von diesem höheren Druckniveau wird offensichtlich eine Kraft auf die flächigen Zuschnitte ausgeübt (dieser Überströmspalt weitet sich), was dazu führt, daß die übrigen Überströmspalte **16** verengt werden, wodurch die Überströmungsgeschwindigkeit ansteigt oder bei gleicher Überströmungsgeschwindigkeit eine geringere Menge an zu überströmendem Fluid pro Zeiteinheit durch die Filterkassette hindurchgepumpt zu werden braucht. Das soll mit den in den Überströmspalten **15** gezeichneten Pfeilen angedeutet werden.

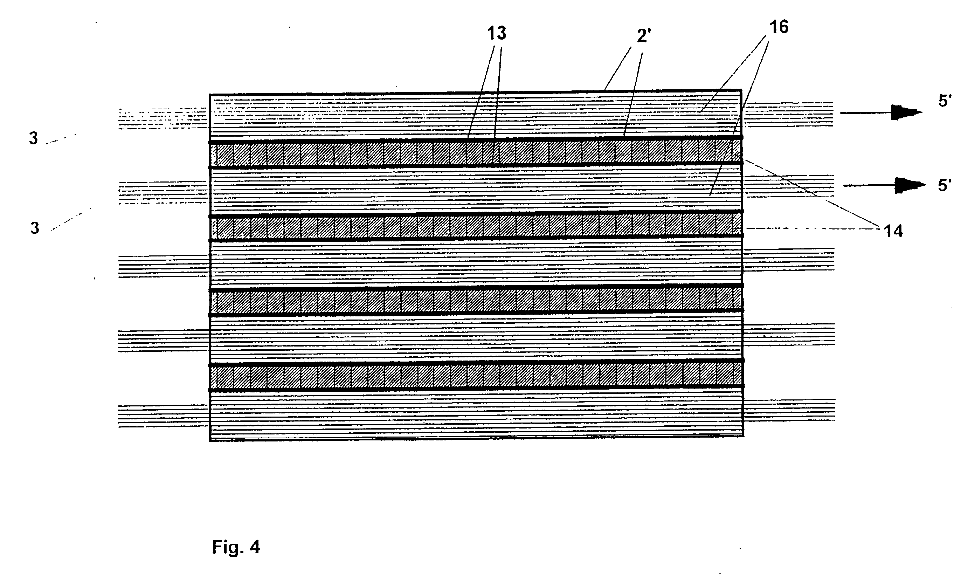

In der in Figur 4 schematisch im Schnitt dargestellten Crossflow-Filterkassette nach dem Stand der Technik herrschen in allen Überströmspalten **15, 16** gleiche Druckverhältnisse, weil die Filterkassette durchweg mit Retentatabstandshaltern **2'** des Standes der Technik aufgebaut sind, bei denen die Zugänge zu den offenen Durchbrechungen **3** und **5'** gleich groß sind.

### Beispiel 1

Mit einer Crossflow-Filterkassette **12** des Typs Sartocon-2 der Sartorius AG, die aus 32 Zuschnitten einer 30.000 Dalton Ultrafiltrationsmembran aus Polyethersulfon (Gesamtmembranfläche 0,7 m²), 16 Filtratabstandshaltern **14** und 17 Retentatabstandshaltern **2, 2'** bestand, wobei die beiden äußeren Retentatabstandshalter **2** einen auf etwa 20 % verringerten Zugang **10** zu den offenen Durchbrechungen **5** zur Ausbildung der Kanäle für den Retentatablauf **8** bezogen auf den größeren Zugang zu den offenen Durchbrechungen **3** zur Ausbildung der Kanäle für den Fluidzulauf **6** aufwies, wurde eine Crossflow-Filtration zur Aufkonzentrierung einer wässrigen Proteinlösung durchgeführt, die 5 % Albumin enthielt. Zur Aufrechterhaltung annähernd gleicher Filtratströme mußten in Abhängigkeit von der Druckdiffernez zwischen Eingangs- und Ausgangsdruck auf der Retentatseite die in der Tabelle 1 angegebenen Rentatströme realisiert werden. Der Transmembrandruck betrug immer 2 bar.

**Tabelle 1**

| Druckdifferenz (Retentatseite) | 1 bar | 2 bar | 3 bar |
|---|---|---|---|
| Retentatfluß [l/hm²] | 445,7 | 750 | 991,4 |
| Filtratfluß [l/hm²] | 110,6 | 122,6 | 131,1 |

### Beispiel 2

Es wurde unter den gleichen Bedingungen wie in Beispiel gearbeitet mit dem Unterschied, daß alle Retentatabstandshalter **2'** gleich große Zugänge zu den Durchbrechungen **3, 5'** zur Ausbildung der Kanäle für den Fluidzulauf **6** und für den Retentatablauf aufwiesen.
Die erhaltenen Meßwerte sind in der Tabelle 2 enthalten.

**Tabelle 2**

| Druckdifferenz (Retentatseite) | 1 bar | 2 bar | 3 bar |
|---|---|---|---|
| Retentatfluß [l/hm²] | 800 | 1347,1 | 1821,4 |
| Filtratfluß [l/hm²] | 113,1 | 126,9 | 132,9 |

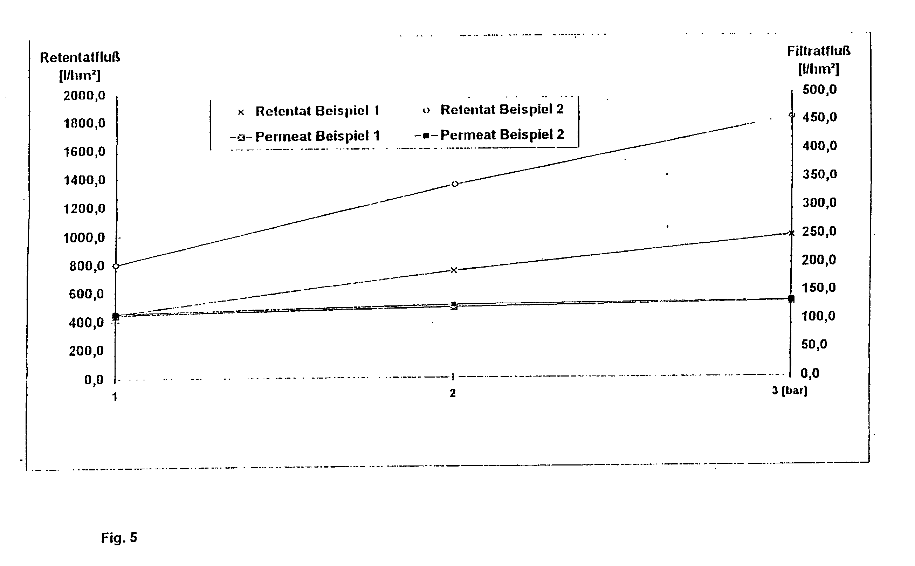

Die Figur 5 gibt die aus den Beispielen 1 und 2 gewonnenen Ergebnisse graphisch wieder. Dabei ist auf der linken Ordinate der Retentatfluß in l/hm² und auf der rechten Ordinate der entsprechende Filtratfluß dargestellt. Auf der Abzisse ist die Druckdifferenz Δp in bar dargestellt. Die Figur 5 zeigt, daß im Vergleich mit herkömmlichen Crossflow-Filterkassetten mit den erfindungsgemäßen verbesserten Crossflow-Filterkassetten zur Erreichung gleicher Filtratleistung bei gleicher Druckdifferenz auf der Retentatseite lediglich Retentatströme, die mindestens um den Faktor 1,8 geringer sein können, realisiert werden müssen. Das führt zu einer deutlichen Verminderung des durch die Pumpenleistung eingetragenen Energieaufwands bei der Crossflow-Filtration.

### Beispiele 3-6

Es wurden Crossflow-Filterkassetten des Typs Sartocon® 2 gefertigt, die aus 28 Zuschnitten einer 30.000 Dalton Ultrafiltrationsmembran aus vernetztem Cellulosehydrat (Hydrosart® der Sartorius AG) mit einer Gesamtmembranfläche von etwa 0,6 m², 14 Filtratabstandshaltern und 15 Retentatabstandshaltem bestanden. Die erfindungsgemäß ausgebildeten Retentatabstandshalter hatten einen auf etwa 20 % verringerten Zugang. Mit den Kassetten wurde in Vergleichsversuchen (Beispiele 3-6) Aufkonzentrierungen einer wässrigen Proteinlösung durchgeführt, die 0,1 % Albumin enthielt.

Der Aufbau der Crossflow-Filterkassetten (Module) und die erhaltenen Filtrationsergebnisse gehen aus der Tabelle 3 hervor. Die Tabelle 3 zeigt, daß es
a) genügt, wenn nur ein Retentatabstandshalter in einer Kassette erfindungsgemäß ausgebildet ist (Beispiel 4) und
b) die Kassetten auch dann sinnvoll einsetzbar sind, wenn alle Retentatabstandshalter erfindungsgemäß ausgebildet sind (Beispiel 6).

**Tabelle 3**

| Ergebnisse der Crossflow-Filtration einer 0,1 %igen Albuminlösung in Wasser bei einem Transmembrandruck von 1,5 bar und einer Druckdifferenz auf der Retentatseite von 3 bar. | | | | |
|---|---|---|---|---|
| Beispiel | Anzahl der Retentatabstandshalter mit verringertem Zugang | Lage im Modul | Retentatfluß [l/hm²] | Filtratfluß [l/hm²] |
| 3 | 0 | nicht vorhanden | 1340 | 100 |
| 4 | 1 | mittig | 830 | 108 |
| 5 | 2 | oben und unten | 700 | 110 |
| 6 | 15 | durchgängig | 690 | 115 |

## Patentansprüche

1. Crossflow-Filterkassetten (12), die aus einer Vielzahl benachbarter Filterzellen aufgebaut sind, die aus alternierend angeordneten, flächigen Zuschnitten von mindestens einem Retentatabstandshalter (2') zur Ausbildung eines Überströmspalts (16) für zu filtrierendes Fluid, einer ersten Membran (13), einem Filtratabstandshalter (14) zur Ausbildung eines Filtratsammelspalts und einer zweiten Membran (13) bestehen, die über fluchtende Durchbrechungen (3, 4, 5) zur Ausbildung von vorzugsweise senkrecht zur Fläche der Zuschnitte verlaufenden Kanälen für Fluidzulauf (6), Retentatablauf (8) und Filtratablauf (7) verfügen und wobei jene Durchbrechungen der Abstandshalter (2, 14) von einer über die Ebene der Abstandshalter (2, 14) geringfügig überstehenden Dichtungsmasse (9) fluiddicht eingefaßt sind, die zu den Kanälen hin geschlossen sind,
**dadurch gekennzeichnet, daß**
wenigstens ein Retentatabstandshalter (2) vorhanden ist, bei dem die Zugänge zu den offenen Durchbrechungen (3, 5) zur Ausbildung der einen Art von Kanälen (6, 8) größer sind, als die Zugänge (10) zu den offenen Durchbrechungen (5, 3) zur Ausbildung der anderen Art von Kanälen (5, 3).

2. Crossflow-Filterkassetten (12), die aus einer Vielzahl benachbarter Filterzellen aufgebaut sind, die aus alternierend angeordneten, flächigen Zuschnitten von mindestens einem Retentatabstandshalter (2') zur Ausbildung eines Überströmspalts (16) für zu filtrierendes Fluid, einer ersten Membran (13), einem Filtratabstandshalter (14) zur Ausbildung eines Filtratsammelspalts und einer zweiten Membran (13) bestehen, die über fluchtende Durchbrechungen (3, 4, 5) zur Ausbildung von vorzugsweise senkrecht zur Fläche der Zuschnitte (2', 13, 14) verlaufenden Kanälen für Fluidzulauf (6). Retentatablauf (8) und Filtratablauf (7) verfügen und wobei jene Durchbrechungen der Abstandshalter (2', 14) von einer über die Ebene der Abstandshalter (2', 14) geringfügig überstehenden Dichtungsmasse (9) fluiddicht eingefaßt sind, die zu den Kanälen hin geschlossen sind und wobei die Membranen (13) in ihren Randbereichen von die Durchbrechungen (3, 4, 5) offen lassenden Schutzrahmen oder im Bereich ihrer Durchbrechungen (3, 4, 5) von die Durchbrechungen (3, 4, 5) offen lassenden Schutzringmasken bedeckt sind,
**dadurch gekennzeichnet, daß**
wenigstens ein Retentatabstandshalter (2) vorhanden ist, bei dem die Zugänge zu den offenen Durchbrechungen (3, 5) zur Ausbildung der einen Art von Kanälen (6, 8) größer sind, als die Zugänge (10) zu den offenen Durchbrechungen (5, 3) zur Ausbildung der anderen Art von Kanälen (8, 6).

3. Crossflow-Filterkassetten (12), nach Anspruch 2,
**dadurch gekennzeichnet, daß**
die Membranen (13) unverstärkt sind.

4. Crossflow-Filterkassetten (12) nach Anspruch 1 bis 3,
**dadurch gekennzeichnet, daß**
die Retentabstandshalter (2) mit den unterschiedlich großen Zugängen zu den offenen Durchbrechungen (3, 5) als äußere und/oder mittige Retentatabstandshalter (2) in den Filterkassetten (12) angeordnet sind.

5. Crossflow-Filterkassetten (12) nach Anspruch 1 bis 3,
**dadurch gekennzeichnet, daß**
die Retentabstandshalter (2) mit den unterschiedlich großen Zugängen zu den offenen Durchbrechungen (3, 5) in periodischer Abfolge in den Filterkassetten (12) angeordnet sind.

6. Verwendung der Crossflow-Filterkassetten (12) nach den vorstehenden Ansprüchen zur Crossflow-Filtration von flüssigen Medien in Crossflow-Filtrationsanlagen mit geringen Pumpenleistungen, in dem die Crossflow-Filterkassetten (12) derart zwischen An- und Abströmplatten eingespannt werden, daß die kleineren Zugänge (10) zu den offenen Durchbrechungen (5) der Retentatabstandshalter (2) mit den Kanälen für den Retentatablauf (8) in kommunizierender Verbindung stehen.

7. Verwendung der Crossflow-Filterkassetten (12) nach den vorstehenden Ansprüchen zur Crossflow-Filtration von flüssigen Medien in Crossflow-Filtrationsanlagen mit großen Pumpenleistungen, in dem die Crossflow-Filterkassetten (12) derart zwischen An- und Abströmplatten eingespannt werden, daß die kleineren Zugänge (10) zu den offenen Durchbrechungen (3) der Retentatabstandshalter (2) mit den Kanälen für den Fluidzulauf (6) in kommunizierender Verbindung stehen.

## Claims

1. Cross-flow filter cassettes (12) which are built up from a plurality of adjacent filter cells consisting of alternately arranged flat blanks of at least one retentate spacer (2') for formation of an overflow gap (16) for fluid to be filtered, a first membrane (13), a filtrate spacer (14) for formation of a filtrate collecting gap and a second membrane (13), which have aligned passages (3, 4, 5) for formation of channels, which preferably extend perpendicularly to the area of the blanks, for fluid feed (6), retentate discharge (8) and filtrate discharge (7) and wherein those passages of the spacers (2, 14), which are closed towards the channels, are fluid-tightly bounded by a sealing mass (9) protruding slightly above the plane of the spacers (2, 14), **characterised in that** at least one retentate spacer (2) is present, in which the entrances to the open passages (3, 5) are, for formation of one kind of channels (6, 8), larger than the entrances (10) to the open passages (5, 3) for formation of the other kind of channels (5, 3).

2. Cross-flow filter cassettes (12) which are built up from a plurality of adjacent filter cells consisting of alternately arranged flat blanks of at least one retentate spacer (2') for formation of an overflow gap (16) for fluid to be filtered, a first membrane (13), a filtrate spacer (14) for formation of a filtrate collecting gap and a second membrane (13), which have aligned passages (3, 4, 5) for formation of channels, which preferably extend perpendicularly to the area of the blanks (2', 13, 14), for fluid feed (6), retentate discharge (8) and filtrate discharge (7) and wherein those passages of the spacers (2', 14), which are closed towards the channels, are fluid-tightly bounded by a sealing mass (9) protruding slightly above the plane of the spacers (2', 14), and wherein the membranes (13) are covered in their edge regions by protective frames leaving the passages (3, 4, 5) open or in the region of their passages (3, 4, 5) by protective annular masks leaving the passages (3, 4, 5) open, **characterised in that** at least one retentate spacer (2) is present, in which the entrances to the open passages (3, 4) are, for formation of one kind of channels (6, 8), greater than the entrances (10) to the open passages (5, 3) for formation of the other kind of channels (8, 6).

3. Cross-flow filter cassettes (12) according to claim 2, **characterised in that** the membranes (13) are non-reinforced.

4. Cross-flow filter cassettes (12) according to claim 1 to 3, **characterised in that** the retentate spacers (2) with the entrances of different size to the passages (3, 5) are arranged as outer and/or middle retentate spacers (2) in the filter cassettes (12).

5. Cross-flow filter cassettes (12) according to claim 1 to 3, **characterised in that** the retentate spacers (2) with the entrances of different size to the open passages (3, 5) are arranged in periodic sequence in the filter cassettes (12).

6. Use of the cross-flow filter cassettes (12) according to the preceding claims for cross-flow filtration of liquid media in cross-flow filtration installations with low pumping capacities, in which the cross-flow filter cassettes (12) are clamped between inflow and outflow plates in such a manner that the smaller entrances (10) to the open passages (5) of the retentate spacers (2) are disposed in communicating connection with the channels for the retentate discharge (8).

7. Use of the cross-flow filter cassettes (12) according to the preceding claims for cross-flow filtration of liquid media in cross-flow filtration installations with large pumping capacities, in which the cross-flow filter cassettes (12) are clamped between inflow and outflow plates in such a manner that the smaller entrances (10) to the open passages (3) of the retentate spacers (2) are disposed in communicating connection with the channels for the fluid feed (6).

## Revendications

1. Cartouches filtres à contre-courant (12) présentant une pluralité de cellules filtrantes voisines, qui comprennent des découpes planes disposées en alternance d'au moins un écarteur de rétentats (2') pour former une fente de trop-plein (16) pour le fluide à filtrer, une première membrane (13), un écarteur de filtrats (14) pour former une fente de récupération de filtrats et une deuxième membrane (13), qui disposent de passages alignés (3, 4, 5) pour former des canaux s'étendant de préférence perpendiculairement au plan des découpes pour l'entrée du fluide (6), l'évacuation des rétentats (8) et l'évacuation des filtrats (7), dans lesquelles ceux des passages des écarteurs (2, 14) fermés en direction des canaux sont enserrés de façon étanche au fluide dans une masse d'étanchéité (9) saillant légèrement du plan des écarteurs (2, 14), **caractérisées en ce qu'**au moins un écarteur de rétentats (2) est présent, dans lequel les accès aux passages ouverts (3, 5) pour former l'un des types de canaux (6, 8) sont plus grands que les accès (10) aux passages ouverts (5, 3) pour former l'autre type de canaux (5, 3) .

2. Cartouches filtres à contre-courant (12) présentant une pluralité de cellules filtrantes voisines, qui comprennent des découpes planes disposées en alternance d'au moins un écarteur de rétentats (2') pour former une fente de trop-plein (16) pour le fluide à filtrer, une première membrane (13), un écarteur de filtrats (14) pour former une fente de récupération de filtrats et une deuxième membrane (13), qui disposent de passages alignés (3, 4, 5) pour former des canaux s'étendant de préférence perpendiculairement au plan des découpes (2', 13, 14) pour l'entrée du fluide (6), l'évacuation des rétentats (8) et l'évacuation des filtrats (7), dans lesquelles ceux des passages des écarteurs (2', 14) fermés en direction des canaux sont enserrés de façon étanche au fluide dans une masse d'étanchéité (9) saillant légèrement du plan des écarteurs (2', 14), et dans lesquelles les membranes (13), dans leurs zones marginales, sont recouvertes par des cadres de protection laissant ouverts les passages (3, 4, 5) ou, dans la zone de leurs passages (3, 4, 5), sont recouvertes par des masques annulaires de protection laissant ouverts les passages (3, 4, 5), **caractérisées en ce qu'**au moins un écarteur de rétentats (2) est présent, dans lequel les accès aux passages ouverts (3, 5) pour former l'un des types de canaux (6, 8) sont plus grands que les accès (10) aux passages ouverts (5, 3) pour former l'autre type de canaux (5, 3).

3. Cartouches filtres à contre-courant (12) selon la revendication 2, **caractérisées en ce que** les membranes (13) ne sont pas renforcées.

4. Cartouches filtres à contre-courant (12) selon les revendications 1 à 3, **caractérisées en ce que** les écarteurs de rétentats (2) avec les accès de tailles différentes vers les passages ouverts (3, 5) sont disposés dans les cartouches filtres (12) comme écarteurs de rétentats (2) extérieurs et/ou centraux.

5. Cartouches filtres à contre-courant (12) selon les revendications 1 à 3, **caractérisées en ce que** les écarteurs de rétentats (2) avec les accès de tailles différentes vers les passages ouverts (3, 5) sont disposés dans les cartouches filtres selon une suite périodique.

6. Utilisation des cartouches filtres à contre-courant (12) selon les revendications précédentes pour la filtration à contre-courant de fluides liquides dans des installations de filtration à contre-courant à faibles rendements de pompage, où les cartouches filtres à contre-courant (12) sont serrées entre les plaques d'aspiration et de refoulement de telle sorte que les accès (10) plus petits aux passages ouverts (5) des écarteurs de rétentats (2) sont en communication avec les canaux d'évacuation des rétentats (8).

7. Utilisation des cartouches filtres à contre-courant (12) selon les revendications précédentes pour la filtration à contre-courant de fluides liquides dans des installations de filtration à contre-courant à grands rendements de pompage, où les cartouches filtres à contre-courant (12) sont serrées entre les plaques d'aspiration et de refoulement de telle sorte que les accès (10) plus petits aux passages ouverts (3) des écarteurs de rétentats (2) sont en communication avec les canaux pour l'entrée de fluide (6).
